# EUROPEAN PATENT APPLICATION

(11) **EP 1 793 206 A2**
(43) Date of publication of application: **06.06.2007**
(21) Application number: 06125024.7
(22) Date of filing: 29.11.2006
(51) Int. Cl.: G01C 21/36

(54) **Route Guidance System and Route Guidance Method**

(30) Priority: 30.11.2005 JP 2005346781
(71) Applicant: AISIN AW CO., LTD., Anjo-shi, Aichi 444-1192 (JP)
(72) Inventor: Nakayama Takaaki / c/o AISIN AW CO. LTD, 444-8564 Aichi (JP); Kato Kiyohide / c/o AISIN AW CO, LTD, 444-8564 Aichi (JP); Tanizaki Daisuke / c/o AISIN AW CO, LTD, 444-8564 Aichi (JP); Takeuchi Kensuke / c/o AISIN AW CO, LTD, 444-8564 Aichi (JP); Oonishi Shino / c/o AISIN AW CO, LTD, 444-8564 Aichi (JP)
(74) Representative: Vossius & Partner

(57) **Abstract**

A route guidance system includes a current position detecting section, route searching processing device for searching for a route, and guidance processing device for setting a route guidance point at a predetermined point in front of a guidance target point and performing a route guidance for the guidance target point when an own vehicle arrives at the route guidance point. The guidance processing device includes guidance target point specifying condition determining processing device for determining whether a guidance target point specifying condition to easily specify the guidance target point is met on the basis of the presence or absence of traffic lights at each of intersections between the route guidance point and the guidance target point while the route guidance is performed. When the guidance target point specifying condition is met, the guidance processing device performs the route guidance whose content is preset corresponding to the guidance target point specifying condition.

## Description

The disclosure of Japanese Patent Application No. 2005-346781 filed on November 30, 2005, including the specification, drawings and abstract thereof, is incorporated herein by reference in its entirety.

The present invention relates to a route guidance system and a route guidance method.

Hitherto, for example, a navigation apparatus mounted on a vehicle detects a current position of the vehicle by GPS (global positioning system), reads out map data from a data storing section, displays a map screen on a display section, and displays the vehicle position indicating the current position of the vehicle, a map of the area surrounding the vehicle, and so on, on the map screen. Therefore, a driver of the vehicle may drive the vehicle using the vehicle position displayed on the map screen as an aid.

Further, when the driver inputs a destination and sets a route search condition, a route from the current position as a starting point to the destination on the map data is searched on the basis of the search condition. The searched route is displayed together with the vehicle position on the map screen, and guidance for the searched route is given. Therefore, the driver may drive the vehicle following the searched route displayed on the screen.

According to the route guidance, for example, when the driver needs to make a right/left turn at a predetermined intersection, audio guidance is output before the vehicle arrives at the turn intersection. To output the audio guidance, one or more route guidance points are set between the vehicle and the turn intersection on the searched route. The one or more route guidance points are more than a predetermined distance away from each other. When the vehicle arrives at each of the route guidance points, a preset audio guidance for each route guidance point is output (for example, Japanese Unexamined Patent Application Publication No. H6-295399).

However, the conventional navigation apparatus described above normally provides route guidance about the turn intersection at each of the route guidance points on the basis of the number of intersections between the vehicle position and the turn intersection. If the turn intersection has a traffic light and if there are intersections with and without traffic lights between the vehicle position and the turn intersection, it is difficult for the driver to recognize which intersection should be counted, so that the driver may confuse the turn intersection with another one.

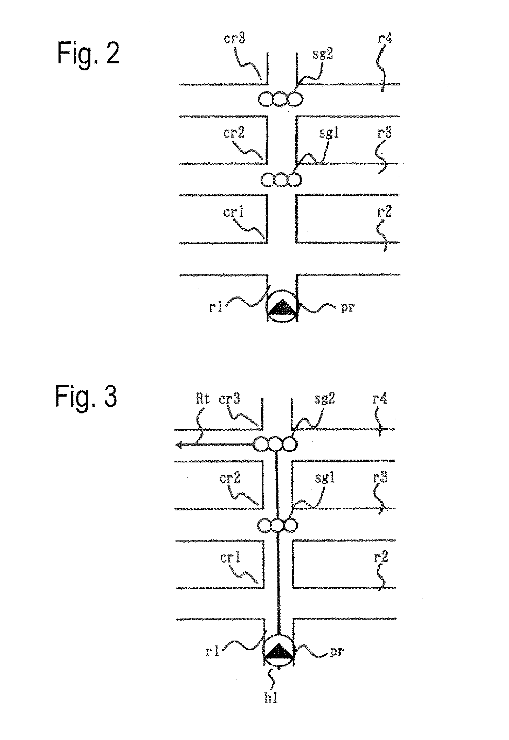

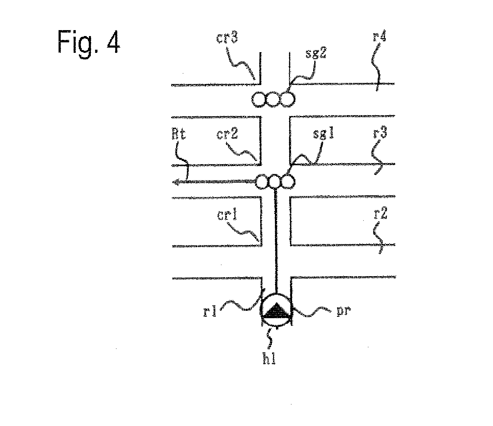

FIG. 2 is a diagram showing route guidance provided by an existing navigation apparatus. FIG. 3 is a diagram showing a first example of possible route guidance provided by an existing navigation apparatus. FIG. 4 is a second example of possible route guidance provided by an existing navigation apparatus.

In figures, "pr" denotes a vehicle position, "ri" (i=1, 2, ...) denotes a road, "crj" (j=1, 2, ...) denotes an intersection at which two or more predetermined roads intersect, and "sgk" (k=1, 2, ...) denotes a traffic light. Further, "Rt" denotes a searched route, and "h1" denotes a route guidance point set on the searched route Rt.

For example, when audio guidance such as "Please turn left at the second intersection with a traffic light," is output at the route guidance point h1, it is difficult for the driver to determine which intersection is "the second intersection with a traffic light". That is, in the case of counting only intersections cr2 and cr3 which have traffic lights sg1 and sg2, "the second intersection with a traffic light" means the intersection cr3, so that the searched route Rt may be the route as shown in FIG. 3. However, in the case of counting the intersections cr2 and cr3 which have the traffic lights sg1 and sg2 as well as an intersection cr1 without a traffic light, "the second intersection with a traffic light" here means the intersection cr2, so that the searched route Rt may be the route as shown in FIG. 4. Therefore, the driver may confuse which intersection to turn at is the turn intersection.

Accordingly, it is an object for the present invention to provide a route guidance system and a route guidance method for making a driver recognize a right turn intersection.

To solve the problems described above, various exemplary implementations of the principles described herein provide a route guidance system in the present invention provides a current position detecting section for detecting a current position of a vehicle as a vehicle position, route search processing device for searching for a route to a destination on the basis of the vehicle position, and guidance processing device for setting a route guidance point at a predetermined point before a guidance target point on the searched route and providing route guidance about the guidance target point, provided that the vehicle arrives at the route guidance point.

Then the guidance processing device includes guidance target point specifying condition determining device for determining whether a guidance target point specifying condition to easily specify a guidance target point during performing a route guidance is met on the basis of the presence or absence of traffic lights at each intersection between the route guidance point and the guidance target point. If the guidance target point specifying condition is met, the guidance processing device outputs preset route guidance according to the guidance target point specifying condition.
According to the present invention, it is determined whether a guidance target point specifying condition under which a guidance target point is easily specified is met during providing route guidance. When the guidance target point specifying condition is met, preset route guidance according to the guidance target point specifying condition is provided, so that it allows a driver to easily recognize which intersection should be counted. Therefore, the driver may recognize a right turn intersection. The invention is further described with reference to the drawings:

FIG. 1 is a diagram of a navigation system according to the present embodiment of the invention.

FIG. 2 is a diagram showing route guidance provided by a conventional navigation apparatus.

FIG. 3 is a diagram showing a first example of possible route guidance provided by a conventional navigation apparatus.

FIG. 4 is a second example of possible route guidance provided by a conventional navigation apparatus.

FIG. 5 is a flowchart showing an operation of guidance processing means in the present embodiment of the invention.

FIG. 6 is a first diagram showing a traffic light layout in the present embodiment of the invention.

FIG. 7 is a second diagram showing a traffic light layout in the present embodiment of the invention.

FIG. 8 is a third diagram showing a traffic light layout in the present embodiment of the invention.

FIG. 9 is a forth diagram showing a traffic light layout in the present embodiment of the invention.

FIG. 10 is a fifth diagram showing a traffic light layout in the present embodiment of the invention.

FIG. 11 is a first diagram showing an example of guidance processing in the present embodiment of the invention.

FIG. 12 is a second diagram showing an example of guidance processing in the present embodiment of the invention.

FIG. 13 is a third diagram showing an example of guidance processing in the present embodiment of the invention.

FIG. 14 is a forth diagram showing an example of guidance processing in the present embodiment of the invention.

FIG. 15 is a fifth diagram showing an example of guidance processing in the present embodiment of the invention.

An embodiment of the present invention is described with reference to the figures below. Note that a navigation system as a route guidance system will be described.

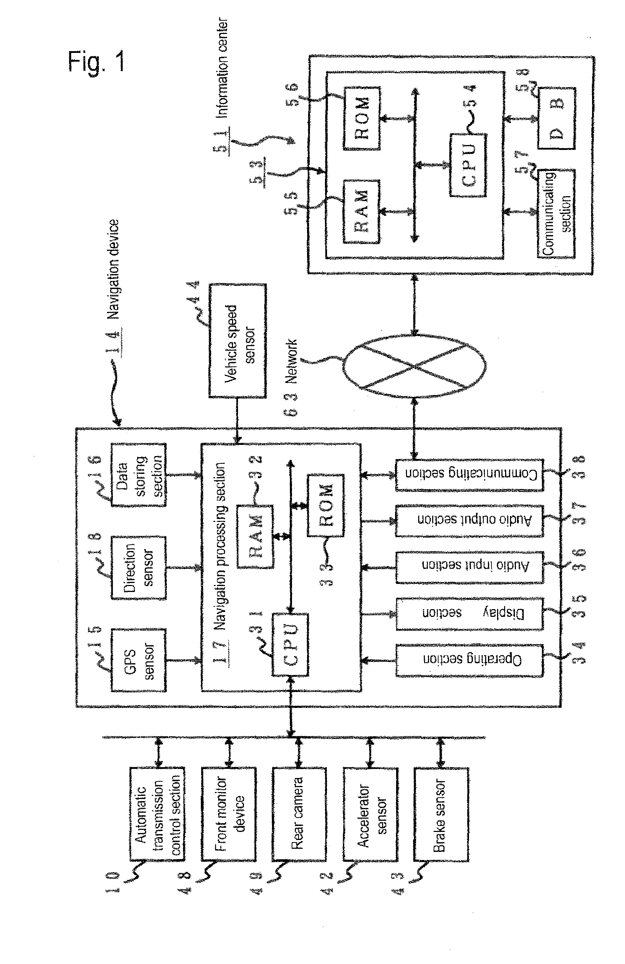

FIG. 1 is a diagram showing a navigation system in an embodiment of the present invention.

In FIG. 1, reference numeral 10 denotes an automatic transmission control section as a power train control section. The automatic transmission control section 10 controls a power train for changing gear at a predetermined transmission gear ratio such as, for example, a continuously variable transmission (CVT), an automatic transmission, and/or an electric drive system.

Reference numeral 14 denotes an information terminal such as, for example, a navigation apparatus as an on-board unit mounted on a vehicle. Reference numeral 63 denotes a network and reference numeral 51 denotes an information center as an information provider. A navigation system may include the automatic transmission control section 10, the navigation apparatus 14, the network 63, and the information center 51.

The navigation apparatus 14 includes a GPS sensor 15 as a current position detecting section for detecting a current position of a vehicle, a data storing section 16 as an information storing section for storing map data and various types of information, a navigation processing section 17 for performing various calculations such as navigation processing on the basis of input information, a direction sensor 18 as a direction detecting section for detecting a vehicle direction, an operating section 34 as a first input section for performing a predetermined input by a driver as a user, a display section 35 as a first output section for displaying various images on a screen (not shown) to guide the driver, an audio input section 36 as a second input section for performing an audio input, an audio output section 37 as a second output section for outputting various audio messages to aid the driver, and a communicating section 38 as a transmitting section functioning as a communication terminal. The GPS sensor 15, the data storing section 16, the direction sensor 18, the operating section 34, the display section 35, the audio input section 36, the audio output section 37, and the communicating section 38 are connected to the navigation processing section 17.

The automatic transmission control section 10, a front monitor device 48 which is mounted at a predetermined position in the front part of the vehicle for monitoring the area in front of the vehicle, a rear camera (rear monitor camera) 49 which is mounted at a predetermined position in the rear part of the vehicle as an imaging device for imaging the area behind the vehicle and as a rear monitor device, an accelerator sensor 42 as an engine load detecting section for detecting the degree of opening of an accelerator pedal (not shown) operated by the driver, a brake sensor 43 as a brake detecting section for detecting the level of braking applied to the vehicle through a brake pedal (not shown) operated by the driver, and a vehicle speed sensor 44 as a vehicle speed detecting section for detecting the vehicle speed may be connected to the navigation processing section 17. Note that, an operation information detecting section for detecting information related to vehicle operation by the driver includes, for example, the accelerator sensor 42 and the brake sensor 43.

The GPS sensor 15 detects a current position on the earth by receiving a radio wave from a satellite and also detects a time. In the present embodiment of the invention, the GPS 15 is used as a current position detecting section. However, a distance sensor, a steering sensor, and/or an altimeter (not shown) may be used independently or together instead of the GPS sensor 15. A gyro sensor or a geomagnetic sensor may be used as the direction sensor 18. Note that, although the direction sensor 18 and the vehicle speed sensor 44 are used in the present embodiment of the invention, the two sensors are not needed when the GPS sensor has a function of detecting, for example, a vehicle direction and a vehicle speed.

The data storing section 16 has a map database including a map data file to store map data therein. The map data includes intersection data regarding intersections, node data regarding nodes, road data regarding road links, search data processed for searching, facility data regarding facilities, and feature data regarding features on a road. As used herein, the term "road link" refers to, for example, a road or portion of a road. For example, according to one type of road data, each road may consist of a plurality of componential units called links. Each link may be separated and defined by, for example, an intersection, an intersection having more than three roads, a curve, and/or a point at which the road type changes.

The feature here means an object set or formed on a road that provides travel information to the driver or that provides travel guidance to the driver such as a line, a road sign, a crosswalk, a manhole, and/or a traffic light. The line may be a stop line indicating where a vehicle should stop, a line separating vehicular lanes, or a line indicating a parking space. The road sign may be an information sign indicating a direction of a lane by means of an arrow, a warning sign such as "STOP" to notify the driver of a stop line or a direction sign such as "the direction of XX" to provide directions to a location. The feature data may include position information indicating the positions of features by means of coordinates and/or image information indicating features by means of images. Note that, the stop line may include an entrance from a nonpriority road to a priority road, a railroad crossing, and/or an intersection with a blinking red light.

The road data regarding the lanes may include lane data such as a lane number for each lane on roads and/or lane position information. The data storing section 16 may store data for outputting predetermined information by the audio output section 37.

Further, the data storing section 16 may include a statistical database including a statistical data file and/or a travel history database including a travel history data file, and statistical data is stored in the statistical data file as past record data as is travel history data in the travel history data file.

The statistical data is a past record of traffic information, that is, history information indicating travel history. The statistical data may include various types of information, that is, for example, past traffic information provided by a road traffic information center (not shown) such as a VICS (Vehicle Information and Communication System), road traffic census information indicating traffic volume obtained by a road traffic census provided by the National Land and Transportation Ministry, and road timetable information provided by the National Land and Transportation Ministry, and such information may be used individually/collectively, modified, or undergo statistical processing, if needed. Note that, congestion prediction information for predicting congestion may be added to the statistical data. In that case, detailed conditions such as date and time, day of the week, weather, various events, season, facility information (presence or absence of large facilities such as a department store and/or a supermarket) may be added to the history information to create the statistical data.

As data items for the statistical data, a link number for each of a plurality of road links, a direction flag indicating a travel direction, a type of information, a congestion degree at each of a plurality of predetermined times, a link required travel times indicating the lengths of time required to travel the road links at predetermined times, and/or average data of the link required time for each day of the week may be included.

The travel history data is collected from a plurality of vehicles, that is, from the vehicle mounted with the navigation apparatus and/or other vehicles, by the information center 51. The travel history data is past record information indicating the travel record of roads along which each vehicle has traveled and is calculated and stored as probe data on the basis of travel data.

As data items for the travel history data, a link required travel time and a congestion degree for each road link at a predetermined time may be included. Note that, the travel history data may be added to the statistical data. Further, in the present embodiment of the invention, the congestion degree is displayed as a congestion indicator; "congested", "crowded", and "not congested", indicating the degree of traffic congestion.

The data storing section 16 may include a disk (not shown) such as a hard disk, a CD, a DVD, or an optical disk to store the various data described above and also include a head (not shown) such as a readout/writing head to read out/write various data. For example, a memory card may be used as the data storing section 16. Note that, an external storage device may be one of the disks described above or a memory card.

In the present embodiment of the invention, the map database, the statistical database, and the travel history database are included in the data storing section 16. However, the map database, the statistical database, and the travel history database may be included in the information center 51 instead.

The navigation processing section 17 includes a CPU 31 as a control device as well as a calculating device for controlling the whole navigation apparatus 14, an RAM 32 as a working memory for helping the CPU 31 to perform various calculations, an ROM 33 for storing a control program and various programs for searching for a route to a destination or for route guidance, and a flash memory (not shown) for storing various data and programs. Note that, an internal storage device may be the RAM 32, the ROM 33, or the flash memory.

In the present embodiment of the invention, various programs are stored in the ROM 33 and various data is stored in the data storing section 16. However, such programs and data may be stored on, for example, a disk. In this case, the programs and/or data may be read out from the disk and be written to a flash memory. Therefore, the programs and/or data may be updated by changing the disk. Further, control program and/or data of the automatic transmission control section 10 may be stored on the disk as well. Then the programs and data may be received through the communicating section 38 and stored in the flash memory of the navigation processing section 17.

By the driver's operation, the operating section 34 is used for correcting a current position when the vehicle starts moving, inputting a starting point and a destination, inputting a point to be passed, and activating the communicating section 38. A keyboard or a mouse which is different from the display section 35 may be used as the operating section 34. Also, a touch panel with image operating sections such as various keys, switches, and buttons may be used as the operating section 34. Such keys, switches, and buttons are displayed on a screen of the display section 35 and touched or clicked for a predetermined input operation.

A display is used as the display section 35. In various screens displayed on the display section 35, for example, a current position of a vehicle as a vehicle position, a vehicle direction, a map, a searched route, guide information along the searched route, traffic information, a distance to a next intersection on the searched route, and/or a travel direction at the next intersection may be displayed. Further, operating instructions and guidance of operating menu/keys of the image operating section, the operating section 34, and the audio input section 36 as well as an FM multiplex telecasting program name may be displayed in the various screens of the display section 35.

The audio input section 36 includes a microphone (not shown) to input necessary information by audio. The audio output section 37 includes a speech synthesis device and a speaker (not shown) to output an audio message synthesized by the speech synthesis device for, for example, the searched route, guidance information, and/or traffic information.

The communicating section 38 may include a beacon receiver and/or an FM receiver. The beacon receiver (for example, electric wave beacon and/or optical beacon) may receive various types of information such as current traffic information and general information sent from, for example, the road traffic information center via, for example, an electric wave beacon device and/or optical beacon device provided along a road. The FM receiver may also receive such information as multiple broadcasts via an FM broadcast station. The traffic information may include, for example, congestion information, road sign information, parking lot information, traffic accident information, and/or information on the busy status of service areas. The general information may include, for example, news and weather reports. The beacon receiver and the FM receiver may be one unit provided as a VICS receiver, or each may be provided separately.

The traffic information may include a type of information, a mesh number to specify a mesh, a link number for specifying a road link which connects two points, for example, two intersections and for indicating the difference between inbound and outbound traffic on the road link, and link information indicating information corresponding to the link number. For example, when traffic information is congestion information, the link information may include data about the head of a traffic jam indicating a distance from the start point of the road link to the head of the traffic jam, the congestion degree, the length of the traffic jam indicating the distance from the head of the traffic jam to the end of the traffic jam, and a link required travel time indicating the length of time required to travel the road link.

The communicating section 38 may receive the map data, the statistical data, the travel history data, and various information such as traffic information and general information from the information center 51 through the network 63.

The information center 51 may include a server 53, a communicating section 57 connected to the server 53, and a database (DB) 58 as an information storing section. The server 53 may include a CPU 54, an RAM 55, and an ROM 56 as a control device and a calculating device. Data the same as the various DATA stored in the data storing section 16 such as the map data, the statistical data, and the travel history data may be stored in the database 58. The information center 51 may provide current traffic information and various information such as general information sent from the road traffic information center and travel history data collected from a plurality of vehicles (the vehicle mounted with the navigation apparatus and/or other vehicles) in real time.

The front monitoring device 48 may include a laser radar, a radar such as a millimeter wave radar, and/or a supersonic sensor, and such radars and sensors are used individually or collectively to monitor a vehicle in front of the vehicle mounted with the navigation apparatus, a stop line, and/or an obstacle. The front monitoring device 48 may detect a relative vehicle speed to the vehicle in front of the vehicle mounted with the navigation apparatus, an approach speed to a stop sign/obstacle as area information and calculates the distance between both vehicles and the time required to reach the next vehicle.

The rear camera 49 including a CCD sensor is attached to the rear part of the vehicle and the optic axis of the rear camera 49 is directed downward to monitor the area behind the vehicle. The rear camera 49 may image a vehicle traveling behind the vehicle mounted with the navigation apparatus, a building on the side of the road, and/or a structural object as well as a feature, create image data of such an object, and send the image data to the CPU 31. The CPU 31 reads the image data, executes image processing, and determines each of the objects in the image as a specific object. In the present embodiment of the invention, the CCD sensor is used as the rear camera 49. However, a C-MOS sensor may be used instead.

Note that, the navigation system, the navigation processing section 17, the CPUs 31 and 54, and the server 53 may function as a computer individually or collectively to execute processing using various programs and data. The data storing section 16, the RAMs 32 and 55, the ROMs 33 and 56, the database 58, and/or the flash memory may function as a storage device. For example, an MPU may be used as a processing device instead of the CPUs 31 and 54.

Next, a basic operation of the navigation system with the structure determined as described above will be described.

When the navigation apparatus 14 is activated by the driver' operation of the operating section 34, a navigation initializing processing means (not shown) of the CPU 31 executes navigation initializing processing, reads a current vehicle position detected by the GPS sensor 15 and a vehicle position detected by the direction sensor 18, and initializes various data. Next, a matching processing means (not shown) of the CPU 31 executes matching processing, determines on which road link the current position is located on the basis of a movement locus of the current position, and a shape and a position of each road link of roads around the current position, and specifies the current position.

In the present embodiment of the invention, the matching processing means may specify the current position on the basis of positions of each feature which are imaged by the rear camera 49.

An image recognizing processing means (not shown) of the CPU 31 executes image recognizing processing, reads image data from the rear camera 49, and recognizes a feature in an image within the image data. A distance calculating processing means (not shown) of the CPU 31 executes distance calculating processing to calculate the distance between the rear camera 49 and the actual feature on the basis of the position of the feature in the image. A current position specifying processing means of the matching processing means executes current position specifying processing, reads the distance described above, further reads feature data from the data storing section 16, obtains the coordinates of the feature, and specifies the current position on the basis of the coordinates and the distance.

A lane detecting processing means (not shown) of the CPU 31 executes lane detecting processing to detect a current traveling lane on the basis of the recognized feature in the image data and the feature data read out from the data storing section 16 in a same way as the current position specifying processing means.

Note that, the lane detecting processing means may read an output from the geomagnetic sensor, determine whether there is an object which is made of a ferromagnetic material such as a predetermined manhole on the road on the basis of the output from the sensor, and detect a traveling lane on the basis of the determination. Further, the current position may be detected with high accuracy by using the high-precision GPS sensor 15. As a result, the traveling lane may be detected on the basis of the result of the detection of the current position. If needed, while image processing is executed for image data of display lines, the traveling lane may be detected by using the output from the geomagnetic sensor and the current position collectively.

A basic information obtaining processing means (not shown) of the CPU 31 executes basic information obtaining processing to read out and obtain the map data from the data storing section 16 or to receive and obtain the map data from the information center 51 through the communicating section 38. Note that, when obtaining the map data from the information center 51, the basic information obtaining processing means downloads the received map data on a flash memory.

A display processing means (not shown) of the CPU 31 executes display processing to display various screens on the display section 35. For example, a map display processing means of the display processing means executes map display processing to display a map screen on the display section 35 and to display an area map as well as the own vehicle position as the current position and the vehicle direction on the map screen.

As a result, the driver may travel the vehicle on the basis of the map, the own vehicle position, and the vehicle direction.

When the driver inputs a destination by operating the operating section 34, a destination setting processing means (not shown) of the CPU 31 executes destination setting processing to set the destination. If needed, a starting point may be input and set. Further, if a predetermined point is stored in advance, the stored point may be set as a destination. When the driver inputs a search condition by operating the operating section 34, a search condition setting processing means (not shown) of the CPU 31 executes search condition setting processing to set a search condition.

After setting the destination and the search condition, a route searching processing means (not shown) of the CPU 31 executes route searching processing, reads out the current position, the destination, and the search condition, reads search data from the data storing section 16, searches for a route from the starting point, which is the current position, to the destination on the search condition on the basis of the read current position, the destination, and the search data, then outputs route data indicating the searched route. In this case, a route which has the minimum total amount of link costs for road links on the route is chosen as the search route.

When a road has a plurality of lanes and a current traveling lane is detected among the lanes, the route search processing means searches for a route including the traveling lane. In this case, the lane number of the traveling lane may be included in the route data.

Note that, the information center 51 may execute route searching processing. The CPU 31 may send the current position, the destination, and the search condition to the information center 51. After the information center 51 receives the current position, the destination, and the search condition, a route searching processing means (not shown) of the CPU 54 executes route searching processing same as the processing by the CPU 31, reads out search data from the database 58, searches for a route from the starting point to the destination on the search condition on the basis of the current position, the destination, an the search data, and outputs route data indicating the searched route. Then a sending processing means (not shown) of the CPU 54 executes sending processing to send the route data to the navigation apparatus 14.

A guidance processing means (not shown) of the CPU 31 executes guidance processing to guide the route. A route display processing means of the guidance processing means executes route display processing, reads the route data, and displays the searched route on the map screen on the basis of the route data.

When the vehicle needs to turn right/left at a predetermined intersection while the route guidance is performed, the intersection is set as a guidance target point and as a turn intersection. A turn intersection setting processing means of the guidance processing means executes turn intersection setting processing and determines whether there is an intersection at which the vehicle needs to turn right\left on the basis of the searched route of the route data. When there is such intersection, the intersection is set as the turn intersection. Note that, as the intersection, any intersection at which an entering road and a plurality of exiting roads are crossed with each other such as a junction of three roads, a right angle cross road, and a junction of five roads may be included.

When the route is searched at the lane level, recommended lane setting processing means of the guidance processing means executes recommended lane setting processing. For example, a recommended traveling lane for passing through the turn intersection such as a suitable lane for entering to the turn intersection or a suitable lane for leaving from the turn intersection is selected and set as a recommended lane. The route display processing means displays the searched route on the map screen, displays an enlarged view of the traveling road of the vehicle in a predetermined range of the map screen, and performs the lane guidance using the road enlarged view. In the road enlarged view, each lane and the set recommended lane may be displayed.

An audio output processing means of the guidance processing means executes audio output processing to output an audio route guidance from the audio outputting section 37. A route guidance point setting processing means of the guidance processing means executes route guidance point setting processing to set one or more than one route guidance points at each point which is in front of the turn intersection on the searched route and is a predetermined distance away from each other. A point guidance processing means of the guidance processing means executes point guidance processing. When the vehicle arrives at each of the route guidance points, the route guidance for the turn intersection whose content is preset corresponding to each of the route guidance points is performed. For example, a route guidance for a distance from the vehicle position to the turn intersection or for right/left turn at the turn intersection may be performed. When a recommended lane is set, lane guidance processing means of the point guidance processing means executes lane guidance processing and performs the lane guidance whose content is preset corresponding to each of the route guidance points. For example, the lane guidance for each of recommended lanes between the vehicle position and the turn intersection or the lane guidance for a recommended lane coming after the turn intersection may be performed.

A guidance target point enlarged view display processing means of the guidance processing means executes guidance target point enlarged view display processing, reads out intersection data, displays an enlarged view of the turn intersection within a predetermined area of the map screen before the vehicle arrives at the turn intersection, and performs a route guidance using the intersection enlarged view. In this case, an area map around the turn intersection, the searched route, a landmark such as a facility for recognizing the turn intersection are displayed on the intersection enlarged view. When the entering road and/or the exiting roads at the turn intersection have a plurality of lanes and the lane guidance is being performed, the guidance target point enlarged view display processing means displays a recommended lane on the intersection enlarged view. Therefore, the intersection data may include data of the name of the intersection, the entering road, the exiting roads, a presence or absence of a traffic light, and the type of the traffic light.

In the present embodiment of the invention, the route guidance about the turn intersection is performed at each of the route guidance points on the basis of the number of intersections existing between the vehicle position and the turn intersection. However, when there is a traffic light at the turn intersection and there are intersections with and without traffic lights between the vehicle position and the turn intersection, it is difficult for the driver to determine which intersection should be counted, so that the driver may recognize a wrong intersection as the turn intersection.

To solve the problem described above, in the present embodiment of the invention, contents of route guidance for each of the route guidance points are evaluated individually and the content of the route guidance is changed on the basis of the evaluation.

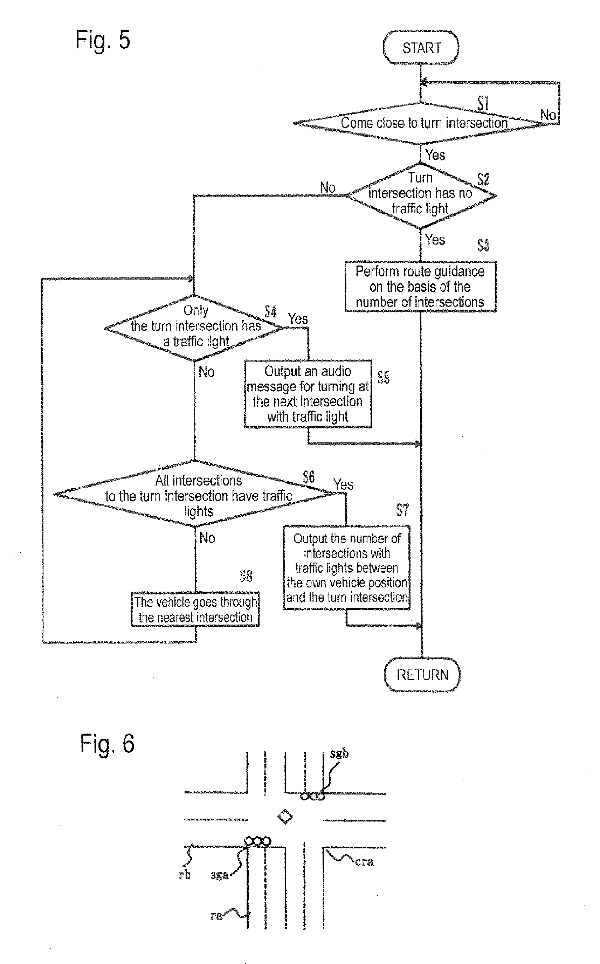

FIG. 5 is a flowchart showing an operation of guidance processing means in the present embodiment of the invention. FIG. 6 is a first diagram showing a traffic light layout in the present embodiment of the invention.

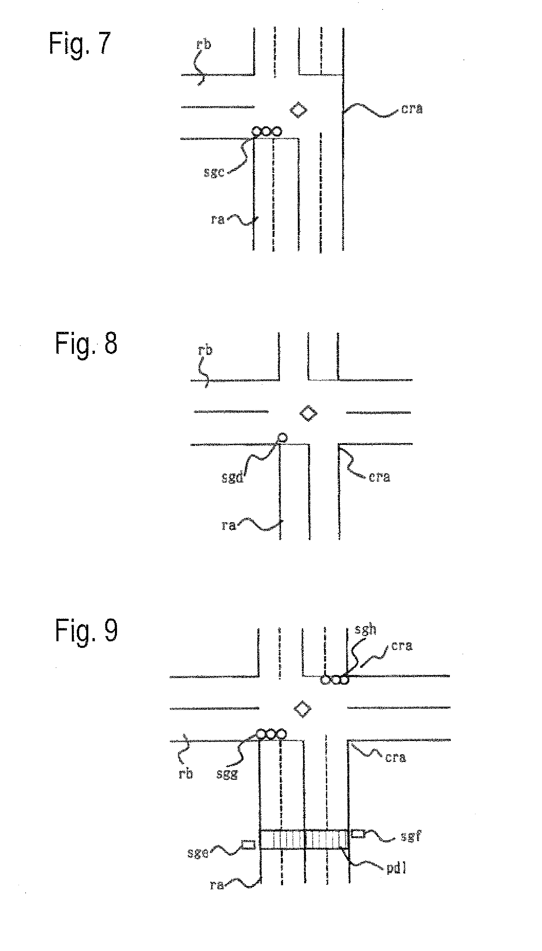

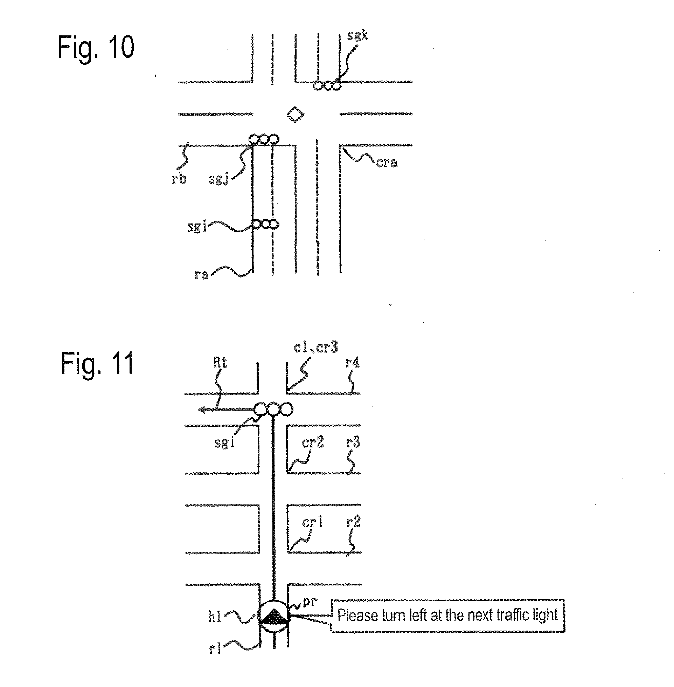

FIG. 7 is a second diagram showing a traffic light layout in the present embodiment of the invention. FIG. 8 is a third diagram showing a traffic light layout in the present embodiment of the invention. FIG. 9 is a forth diagram showing a traffic light layout in the present embodiment of the invention. FIG. 10 is a fifth diagram showing a traffic light layout in the present embodiment of the invention.

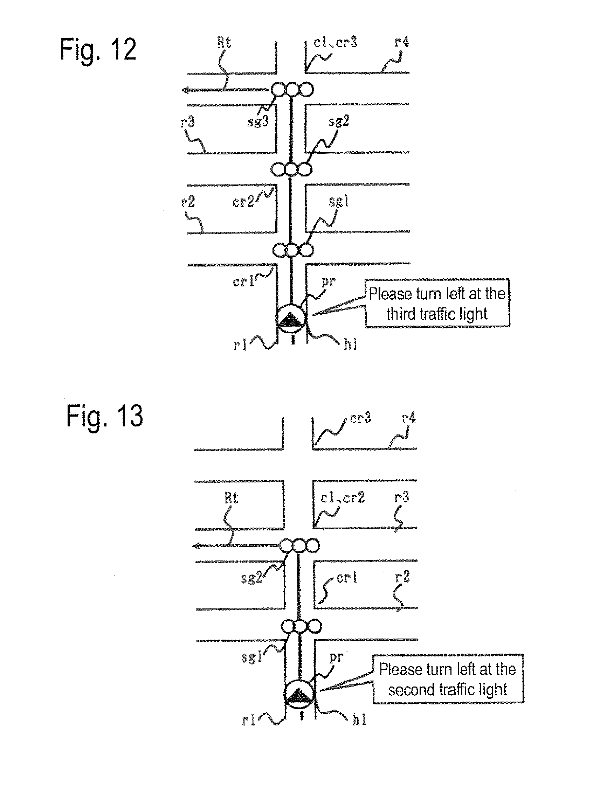

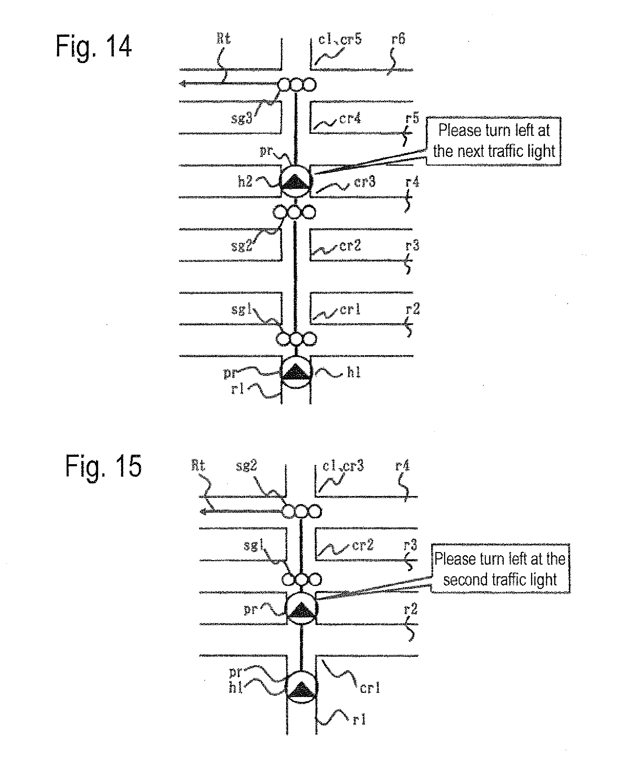

FIG. 11 is a first diagram showing an example of guidance processing in the present embodiment of the invention. FIG. 12 is a second diagram showing an example of guidance processing in the present embodiment of the invention. FIG. 13 is a third diagram showing an example of guidance processing in the present embodiment of the invention. FIG. 14 is a forth diagram showing an example of guidance processing in the present embodiment of the invention. FIG. 15 is a fifth diagram showing an example of guidance processing in the present embodiment of the invention.

In FIGs. 6 through 10, "ra" and "rb" are roads, "cra" is an intersection at which the road ra and rb are crossed with each other, "sga" through "sgk" are traffic lights, and "pd1" is a crosswalk. Among the traffic lights sga through sgk, traffic lights sga through sgc, sgg through sgh, and sgj through sgk are traffic lights which have three lights and belong to the intersection cra. A traffic light sgd is a traffic light which has one light and belongs to the intersection cra. Traffic lights sge and sgf are signals for pedestrians which belong to a crosswalk pd1, not to the intersection cra. The traffic light sgi is a traffic light which is located in front of the intersection cra to give notice of the existence of the intersection cra.

In FIGs. 11 though 15, "pr" is a vehicle position, "ri" (i=1, 2, ...) is a road, "crj" (j=1, 2, ...) is an intersection at which more than two predetermined roads are crossed with each other, and "sgk" (k=1, 2, ...) is a traffic light. "Rt" is a searched route, "c1" is a turn intersection indicating an intersection which is set on the searched route Rt1 and at which the vehicle turns right/left among the intersections "crj". "h1" and "h2" are route guidance points set in front of the turn intersection c1 on the searched route Rt.

In FIG. 11, the roads r1 and r2 are crossed with each other at the intersection cr1. The roads r1 and r3 are crossed with each other at the intersection cr2. The roads r1 and r4 are crossed with each other at the intersection cr3. The searched route Rt goes to the road r1 and turns left at the intersection cr3. The intersection cr3 is the turn intersection c1. The intersections cr1 and cr2 do not have traffic lights and the intersection cr3 has the traffic light sg1.

In FIG. 12, the roads r1 and r2 are crossed with each other at the intersection cr1. The roads r1 and r3 are crossed with each other at the intersection cr2. The roads r1 and r4 are crossed with each other at the intersection cr3. The searched route Rt goes to the road r1 and turns to left at the intersection cr3. The intersection cr3 is the turn intersection c1. The intersections cr1 through cr3 have the traffic lights sg1 through sg3.

In FIG. 13, the roads r1 and r2 are crossed with each other at the intersection cr1. The roads r1 and r3 are crossed with each other at the intersection cr2. The roads r1 and r4 are crossed with each other at the intersection cr3. The searched route Rt goes to the road r1 and turns left at the intersection cr2. The intersection cr2 is the turn intersection c1. The intersections cr1 and cr2 have the traffic lights sg1 and sg2, but the intersection cr3 does not have a traffic light.

In FIG. 14, the roads r1 and r2 are crossed with each other at the intersection cr1. The roads r1 and r3 are crossed with each other at the intersection cr2. The roads r1 and r4 are crossed with each other at the intersection cr3. The roads r1 and r5 are crossed with each other at the intersection cr4. The roads r1 and r6 are crossed with each other at the intersection cr5. The searched route Rt goes to the road r1 and turns left at the intersection cr5. The intersection cr5 is the turn intersection c1. The intersections cr1, cr3, and cr5 have the traffic lights sg1 through sg3, but the intersections cr2 and cr4 do not have traffic lights.

In FIG. 15, the roads r1 and r2 are crossed with each other at the intersection cr1. The roads r1 and r3 are crossed with each other at the intersection cr2. The roads r1 and r4 are crossed with each other at the intersection cr3. The searched route Rt goes to the road r1 and turns left at the intersection cr3. The intersection cr3 is the turn intersection c1. The intersections cr2 and cr3 have the traffic lights sg1 and sg2, but the intersection cr1 does not have a traffic light.

In this case, a point arrival determining processing means of the guidance processing means executes point arrival determining processing to determine whether the vehicle comes close to the turn intersection c1 and arrives at the predetermined route guidance point h1. When the vehicle arrives at the predetermined route guidance point h1, a traffic light determining processing means as guidance target point specifying condition determining processing means of the guidance processing means executes traffic light determining processing as guidance target point specifying condition determining processing, reads out intersection data, and determines whether a first through third guidance target point specifying conditions to easily specify the turn intersection c1 are met on the basis of the presence or absence of the traffic light sgk at each of the intersections crj between the route guidance point h1 and the turn intersection c1 while route guidance is performed. When the first through third guidance target point specifying conditions are met, point guidance processing means of the guidance processing means executes point guidance processing to perform a route guidance whose content is preset corresponding to each of the first through third guidance target point specifying conditions. Note that, during the traffic light determining processing, the signals for pedestrians sge and sgf in FIG. 9 and the traffic light sgi for giving a notice in FIG. 10 are not determined as traffic lights here.

More specifically, the traffic light determining processing means determines whether there is a traffic light at the turn intersection c1 and whether the first guidance target point specifying condition is met.

When there is no traffic light at the turn intersection c1 and the first guidance target point specifying condition is met, a branch calculating processing means of the guidance processing means executes branch calculating processing to calculate the number of branches to be calculated between the vehicle position pr and the turn intersection c1. In the present embodiment of the invention, the number of the intersections crj is calculated. In this case, intersection calculating processing means is included in branch calculating processing means and intersection calculating processing is included in branch calculating processing. Note that, in the present embodiment of the invention, the turn intersection c1 is included in the intersections crj to be calculated.

Then the point guidance processing means outputs an audio route guidance on the basis of the number of the intersections crj.

Meanwhile, when there is a traffic light at the turn intersection c1, the traffic light determining processing means determines whether there are traffic lights sgk at each of the intersections crj between the vehicle position pr and the turn intersection c1 and whether the second guidance target point specifying condition is met, that is, whether only the turn intersection c1 has a traffic light. When only the turn intersection c1 has a traffic light and the second guidance target point specifying condition is met, the point guidance processing means performs a route guidance on the basis of the intersection with traffic light between the vehicle position pr and the turn intersection c1 and outputs an audio message for the vehicle to turn right/left at a next intersection with traffic light. In this case, the turn intersection c1 is the only intersection with a traffic light among intersections between the vehicle position pr and the turn intersection c1, so that the audio message tells the driver to turn to right/left at the turn intersection c1.

When the second guidance target point specifying condition is not met and there is an intersection with a traffic light other than the turn intersection c1, the traffic light determining processing means determines whether the third guidance target point specifying condition is met, that is, whether all of the intersections crj between the vehicle position pr and the turn intersection c1 have traffic lights. When all of the intersections crj between the vehicle position pr and the turn intersection c1 have traffic lights and the third guidance target point specifying condition is met, the point guidance processing means performs a route guidance on the basis of the number of the intersections with traffic lights between the vehicle position pr and the turn intersection c1 and outputs the number of such intersections by audio.

When the third guidance target point specifying condition is not met and a predetermined intersection among the intersections crj between the vehicle position pr and the turn intersection c1 has no traffic light, a guidance delaying processing means of the guidance processing means executes guidance delaying processing, so that the route guidance is delayed and not performed at the route guidance point h1, and the vehicle goes through a closest intersection.

After that, the traffic light determining processing means repeatedly determines whether the second and third guidance target point specifying conditions are met and the guidance delaying processing means allows the vehicle to go through the nearest intersection until one of the second and third conditions is met, for example, until only the turn intersection c1 has a traffic light or until all of the intersections crj between the vehicle position pr and the turn intersection c1 have traffic lights. When one of the second and third guidance target point specifying conditions is met, the point guidance processing means performs the route guidance described above. Note that, the guidance target point traffic light determining condition depends on the first guidance target point specifying condition. The first and second intersection traffic light determining conditions depend on the second and third guidance target point specifying conditions.

For example, in an example of FIG. 11, the turn intersection c1 has the traffic light sg1. Therefore, when the vehicle arrives at the route guidance point h1, it is determined whether each of the intersections cr1 through cr3 between the vehicle position pr and the turn intersection c1 have traffic lights or not. In this case, only the turn intersection c1 has the traffic light sg1, that is, the first traffic light determining condition is met, so that the point guidance processing means performs the route guidance on the basis of the turn intersection c1 and outputs an audio message such as "Please turn left at the next traffic light."

Note that, if the turn intersection c1 does not have a traffic light in FIG. 11, the number of the intersections cr1 through cr3 between the vehicle position pr and the turn intersection c1 is counted when the vehicle arrives at the route guidance point h1. In this case, the number of the intersections cr1 through cr3 is three, so that the point guidance processing means outputs an audio message such as "Please turn left at the third intersection."

In an example of FIG. 12, when the vehicle arrives at the route guidance point h1, it is determined whether the intersections cr1 through cr3 between the vehicle position pr and the turn intersection c1 have traffic lights or not. In this case, all of the intersections cr1 through cr3 between the vehicle position pr and the turn intersection c1 have the traffic lights sg1 through sg3, that is, the third guidance target point specifying condition is met, so that the point guidance processing means performs the route guidance on the basis of the number of the intersections cr1 through cr3 and outputs an audio message such as "Please turn left at the third traffic light.", "Please turn left at the intersection with the third traffic light.", or "Please turn left at the third intersection with traffic light."

In an example of FIG. 13, when the vehicle arrives at the route guidance point h1, it is determined whether the intersections cr1 and cr2 between the vehicle position pr and the turn intersection c1 have traffic lights or not. In this case, both of the intersections cr1 and cr2 between the vehicle position pr and the turn intersection c1 have the traffic lights sg1 and sg2 as in the case of FIG. 12, that is, the third guidance target point specifying condition is met, so that the point guidance processing means performs the route guidance on the basis of the number of the intersections cr1 and cr2 and outputs an audio message such as "Please turn left at the second traffic light."

In an example of FIG. 14, when the vehicle arrives at the route guidance point h1, it is determined whether the intersections cr1 through cr5 between the vehicle position pr and the turn intersection c1 have the traffic lights or not. In this case, the intersections cr1, cr3, and cr5 between the vehicle position pr and the turn intersection c1 have traffic lights sg1, sg3, and sg5, but the intersections cr2 and cr4 do not have traffic lights, that is, the second and third guidance target point specifying conditions are not met. Therefore, the guidance delaying processing means makes the vehicle go through the closest intersection and delays the route guidance, that is, the route guidance is not performed at the route guidance point h1.

After that, it is repeatedly determined whether the second and third guidance target point specifying conditions are met. The guidance delaying processing means allows the vehicle to go through the nearest intersection until one of the second and third conditions is met. When the vehicle goes through the intersection cr3 and arrives at the route guidance point h2, only the turn intersection c1 has the traffic light sg3, that is, the second guidance target point specifying condition is met. Therefore, the point guidance processing means performs the route guidance for the turn intersection c1 at the route guidance point h2 and outputs an audio message such as "Please turn left at the next traffic light." or "Please turn left at the next intersection with traffic light."

In an example of FIG. 15, when the vehicle arrives at the route guidance point h1, it is determined whether the intersections cr1 through cr3 between the vehicle position pr and the turn intersection c1 have traffic lights or not. In this case, the intersections cr2 and cr3 between the vehicle position pr and the turn intersection c1 have the traffic lights sg1 and sg2, but the intersection cr1 does not have a traffic light, that is, the second and third guidance target point specifying conditions are not met. Therefore, the guidance delaying processing means makes the vehicle go through the closest intersection cr1 and delays the route guidance without performing the route guidance at the route guidance point h1.

Once the vehicle goes through the intersection cr1, both of the intersection cr2 and cr3 between the vehicle position pr and the turn intersection c1 have the traffic lights sg1 and sg2, that is, the third guidance target point specifying conditions is met. Therefore, the point guidance processing means performs the route guidance on the basis of the number of the intersections cr2 and cr3 and outputs an audio message such as "Please turn left at the second traffic light."

As described above, in the present embodiment of the invention, it is determined whether the first through third guidance target point specifying conditions to easily specify the turn intersection c1 are met while the route guidance is performed. When the first through third guidance target point specifying conditions are met, the route guidance whose content is preset corresponding to each of the first through third guidance target point specifying conditions is performed, so that the driver may easily determine which intersection should be counted. Therefore, the driver may recognize the turn intersection c1 without a mistake.

Next, a flowchart will be described.
Step S1 Waits for the vehicle to come close to the turn intersection c1. When the vehicle comes close to the turn intersection c1, the procedure goes to Step S2.
Step S2 Determines whether the turn intersection c1 has the traffic light sgk. When the turn intersection c1 does not have the traffic light sgk, the procedure goes to Step S3. When the turn intersection c1 has the traffic light sgk, the procedure goes to Step S4.
Step S3 Performs the route guidance on the basis of the number of the intersections crj and the procedure returns. Step S4 Determines whether only the turn intersection c1 has the traffic light sgk. When only the turn intersection c1 has the traffic light sgk, the procedure goes to Step S5. If the turn intersection c1 does not have the traffic light sgk, the procedure goes to Step S6.
Step S5 Outputs an audio message for noticing the driver to make a turn at the intersection crj with the traffic light sgk, and the procedure returns.
Step S6 Determines whether all of the intersections crj to the turn intersection c1 have the traffic lights sgk. When all of the intersections crj to the turn intersection c1 have the traffic lights sgk, the procedure goes to Step S7. When some of the intersections crj to the turn intersection c1 do not have the traffic lights sgk, the procedure goes to Step S8.
Step S7 Outputs an audio message for the number of the intersections crj between the vehicle position pr and the turn intersection c1 with the traffic light sgk, and the procedure returns.
Step S8 The vehicle goes through the nearest intersection crj, and the procedure return to Step S4.

In the present embodiment of the invention, the branch calculating processing means calculates the number of the intersections crj between the vehicle position pr and the turn intersection c1 as a target branch to be calculated. However, the number of roads which are crossed with the road r1 may be calculated instead of the number of the intersections crj between the vehicle position pr and the turn intersection c1. In the case, the road which is crossed with the road r1 at the turn intersection c1 may be included in roads to be counted.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.

## Claims

1. A route guidance system, comprising:
a current position detecting section (15) for detecting a current position of a vehicle as a vehicle position;
route searching processing means (17) for searching for a route to a destination on the basis of the vehicle position; and
guidance processing means (17) for setting a route guidance point at a predetermined point before a guidance target point on the searched route and providing route guidance about the guidance target point, provided that the vehicle arrives at the route guidance point; wherein the guidance processing means (17) comprises guidance target point specifying condition determining means (17) for determining whether a guidance target point specifying condition under which a guidance target point is specified during the route guidance is met on the basis of the presence or absence of traffic lights at each of at least one intersection between the route guidance point and the guidance target point and the guidance processing means (17) further outputs the route guidance whose content is preset according to the guidance target point specifying condition.

2. The route guidance system according to Claim 1, wherein:
the guidance target point specifying condition is met, provided that the guidance target point has no traffic lights, and the guidance processing means (17) comprises intersection number calculating means (17) for calculating the number of intersections between the vehicle position and the guidance target point, the point guidance processing means (17) providing the route guidance on the basis of the calculated number of intersections.

3. The route guidance system according to Claim 1, wherein:
the guidance target point specifying condition is met, provided that only the guidance target point has traffic lights, the guidance processing means (17) providing the route guidance on the basis of the number of intersections with traffic lights between the vehicle position and the guidance target point.

4. The route guidance system according to any one of Claims 1 to 3, wherein:
the guidance target point specifying condition is met, provided that all of the intersections between the vehicle position and the guidance target point have traffic lights, the guidance processing means (17) providing the route guidance on the basis of the number of intersections with traffic lights between the vehicle position and the guidance target point.

5. The route guidance system according to any one of Claims 1 to 4, comprising:
guidance delaying processing means (17) for delaying, when the guidance target point specifying condition is not met, the route guidance without outputting the route guidance at the route guidance point and allowing the vehicle to go through the nearest intersection.

6. The route guidance system according to Claim 5, wherein:
the guidance delaying processing means (17) delays output of the route guidance until a condition where only the guidance target point has a traffic light is met.

7. The route guidance system according to Claims 5 or 6, wherein:
the guidance delaying processing means (17) delays output of the route guidance until a condition where all of the intersections between the vehicle position and the guidance target point have traffic lights is met.

8. A route guidance method, comprising the steps of:
detecting a current position of a vehicle as a vehicle position;
searching for a route to a destination on the basis of the vehicle position;
setting a route guidance point at a predetermined point before a guidance target point on the searched route;
providing a route guidance about the guidance target point, provided that the vehicle arrives at the route guidance point;
determining whether a guidance target point specifying condition under which the guidance target point is specified during the route guidance is met on the basis of a presence or absence of traffic lights at each of at least one intersection between the route guidance point and the guidance target point; and
outputting the route guidance whose content is preset corresponding to the guidance target point specifying condition, provided that the guidance target point specifying condition is met.
